# EUROPEAN PATENT APPLICATION

(11) **EP 2 640 015 A1**
(43) Date of publication of application: **18.09.2013**
(21) Application number: 11839149.9
(22) Date of filing: 28.09.2011
(51) Int. Cl.: H04L 12/56

(54) **METHOD AND DEVICE FOR CONFIGURING VPLS MAC ENTRY SPACE**

(30) Priority: 11.11.2010 CN 201010541189
(71) Applicant: ZTE Corporation, Shenzhen, Guangdong 518057 (CN)
(72) Inventor: CHEN, Shimeng, Guangdong 518057 (CN)
(74) Representative: Novagraaf Technologies
(86) International application number: PCT/CN2011/080319
(87) International publication number: WO 2012/062156

(57) **Abstract**

The present invention discloses a method and an apparatus for configuring a Virtual Private LAN service (VPLS) Media Access Control (MAC) item space. The method includes the following steps. When a User facing-Provider Edge (UPE) receives a message from a network side, executing an operation of not learning the MAC information of the message from the network side in a VPLS MAC table on the UPE; and when the UPE receives a message from a user side, executing an operation of learning the MAC information of the message from the user side in the VPLS MAC table on the UPE, wherein a side of the UPE connected with a network device is the network side and the other side of the UPE connected with a user device is the user side. The present invention solves the technical problem of reduction of processing performance caused by the exhaustion of VPLS MAC item space on the UPE in the conventional art and improves the forwarding performance of the UPE.

## Description

### Technical Field

The present invention relates to the communication field, in particular to a method and an apparatus for configuring a Virtual Private LAN service (VPLS) Media Access Control (MAC) item space.

### Background

The VPLS is a point-to-multipoint double-layer Virtual Private Network (VPN) service provided in a public network. The VPLS enables user sites isolated in a region to be connected through a Metropolitan Area Network (MAN) or a Wide Area Network (WAN), and the connection effect among the sites is like that in a Local Area Network (LAN).

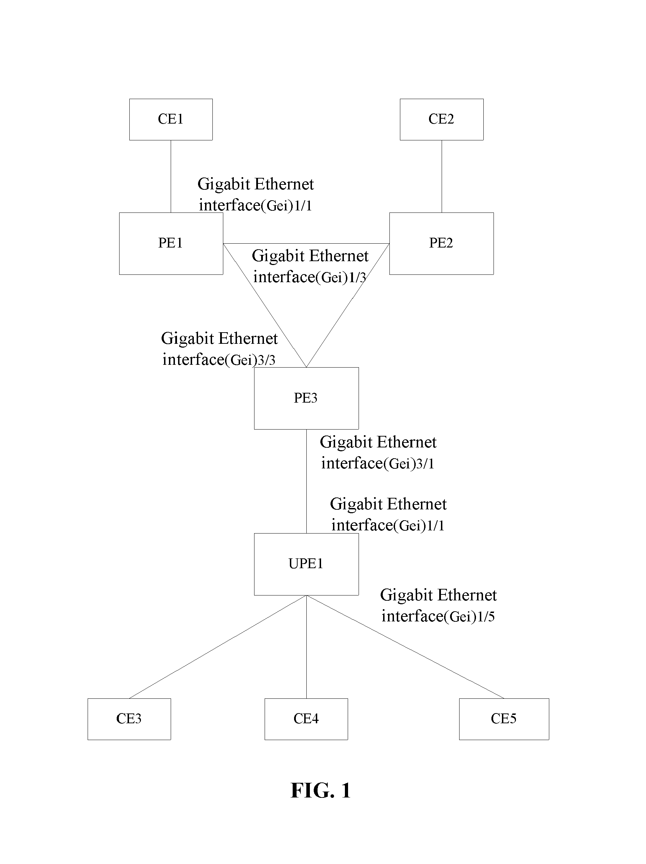

As shown in Fig. 1, a simple VPLS networking diagram is given here, and the topology consists of a plurality of Provider Edges (PEs) and a User facing-Provider Edge (UPE). A VPLS fully connected link is set up among PE1, PE2 and PE3; Customer Edge 1 (CE1) accesses PE1; CE2 accesses PE2; UPE1 accesses PE3; and generally, the UPE has worse performance than the PE, specifically having small forwarding item space, low processing speed and the like. CE3, CE 4 and CE5 are hooked with the UPE1.

After the link is established successfully, all the users can communicate correctly. Because the VPLS is a double-layer service, a message is forwarded based on an MAC address. Therefore, after receiving a message from a user, the PE or UPE learns a source MAC address at first and then forwards the message according to a destination MAC address. For example, CE1 (of which the MAC is A) will communicate with CE5 (of which the MAC is E), the message from CE1 is received by PE1 at first; at the moment, PE1 learns the MAC A, adds the MAC A to an own VPLS MAC table, and searches for a forwarding table by the destination MAC E; and there is no entry related to E in the item as the communication is performed for the first time, so that the message needs to be broadcast to all the members, i.e., PE2 and PE3. Like PE1, after receiving the message, PE2 and PE3 learn the MAC A of CE1 at first and then search for a forwarding table by the destination MAC E; and there is also no entry related to E in the VPLS MAC item of PE2 and PE3, so that the message is broadcast to CE2 by PE2 and to UPE1 by PE3. By the same processing flow above, UPE1 learns the MAC A of CE1 at first after receiving the message and then the message is broadcast to CE3, CE4 and CE5. CE5 responds to CE1 after receiving the message; at the moment, UPE1 learns the MAC E of CE5 at first after receiving the message from CE5 and then searches for a VPLS MAC forwarding table by the destination MAC A; and there is an entry, A, in the VPLS MAC item of UPE1 at the moment, so that the message can be transmitted to PE3 in a unicast mode. Like UPE1, PE3 learns MAC E and the message is transmitted to PE1 in a unicast mode. In the same way above, PE1 learns MAC E and the message is transmitted to CE1 in a unicast mode. By the flow above, the MAC addresses of CE1 and CE5 are learned by PE1, PE2, PE3 and UPE1, so that CE1 and the CE5 can communicate in a unicast mode in the future.

But a problem arises, if more and more users access, the VPLS MAC item space of PE1, PE2, PE3 and UPE1 is smaller and smaller; and UPE1 generally has poor performance and small VPLS MAC item space, so that the VPLS MAC item of UPE1 will be exhausted at first along with the accessing of users. After the VPLS MAC item of UPE1 is exhausted, UPE1 cannot learn the MAC of a new user, so that a message transmitted to the new user is finally forwarded in a broadcasting mode, which results in waste of network bandwidth resources and also reduction of processing performance of UPE1.

### Summary

The present invention provides a method and an apparatus for configuring VPLS MAC item space, so as to at least solve the technical problem of reduction of processing performance caused by the exhaustion of the VPLS MAC item space of a UPE above.

According to an aspect of the present invention, the present invention provides a method for configuring a VPLS MAC item space, including the following steps: when a UPE receives a message from a network side, executing an operation of not learning MAC information of the message from the network side in a VPLS MAC table on the UPE; and when the UPE receives a message from a user side, executing an operation of learning the MAC information of the message from the user side in the VPLS MAC table on the UPE, wherein a side of the UPE connected with a network device is the network side and the other side of the UPE connected with a user device is the user side.

According to another aspect of the present invention, the present invention provides an apparatus for configuring a VPLS MAC item space, including: a first execution unit, configured to, when a UPE receives a message from a network side, execute an operation of not learning MAC information of the message from the network side in a VPLS MAC table on the UPE; and a second execution unit, configured to, when the UPE receives a message from a user side, execute an operation of learning MAC information of the message from the user side in the VPLS MAC table on the UPE, wherein a side of the UPE connected with a network device is the network side and the other side of the UPE connected with a user device is the user side.

In the present invention, after receiving a message from the network side , the UPE does not learn the message from the network side, so as to reduce the VPLS MAC item space on the UPE, improve the forwarding performance of the UPE and solve the technical problem of reduction of processing performance caused by the exhaustion of the VPLS MAC item space on the UPE in the conventional art.

### Brief Description of the Drawings

Drawings, provided for further understanding of the present invention and forming a part of the specification, are used to explain the present invention together with embodiments of the present invention rather than to limit the present invention, wherein:
Fig. 1 is a network topology map of a VPLS according to the relevant art;
Fig. 2 is a preferred flowchart of a method for configuring a VPLS MAC item space according to an embodiment of the present invention;
Fig. 3 is another preferred flowchart of a method for configuring a VPLS MAC item space according to an embodiment of the present invention; and
Fig. 4 is a preferred schematic diagram of the structure of an apparatus for configuring a VPLS MAC item space according to an embodiment of the present invention.

### Detailed Description of the Embodiments

### Embodiment 1

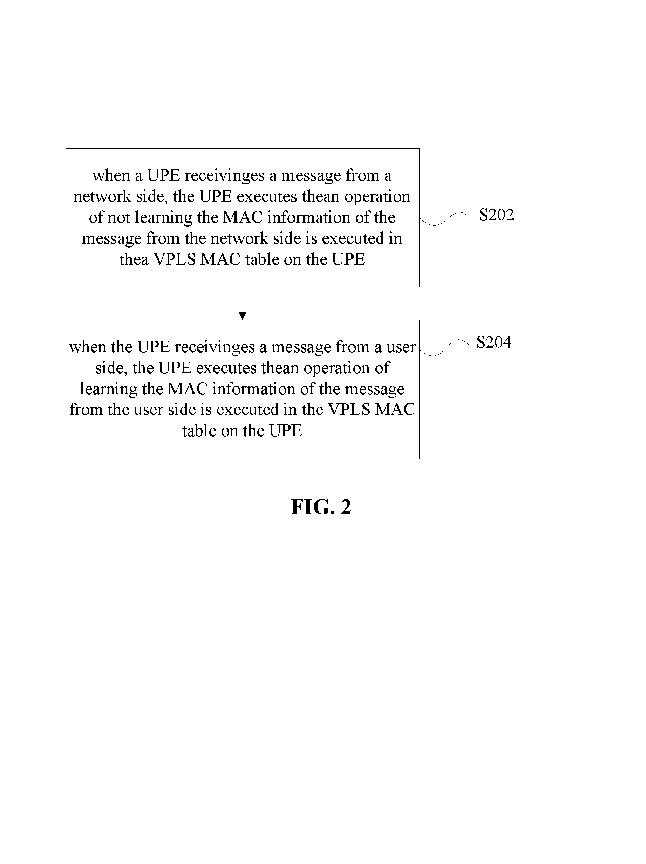

Fig. 2 is a preferred flowchart of a method for configuring a VPLS MAC item space according to an embodiment of the present invention. The method includes the following steps.

Step 202, when receiving a message from a network side, the UPE executes an operation of not learning MAC information of the message from the network side in a VPLS MAC table on the UPE; and

Step 204, when receiving a message from a user side, the UPE executes an operation of learning MAC information of the message from the user side in the VPLS MAC table on the UPE, wherein a side of the UPE connected with a network device is the network side and the other side of the UPE connected with a user device is the user side.

In the preferred embodiment, after receiving a message from the network side, the UPE does not learn the message from the network side, so as to reduce the VPLS MAC item space on the UPE, improve the forwarding performance of the UPE, solve the technical problem of reduction of processing performance caused by the exhaustion of the VPLS MAC item space on the UPE in the conventional art and improve the forwarding performance of the UPE.

Preferably, the UPE is only connected with one network device in the network side. In the preferred embodiment, the UPE is only connected with one network device, so as to improve the forwarding performance. Of course, in the embodiment, the UPE can be connected with a plurality of user devices on the user side.

Preferably, when the UPE receives the message from the network side, the method further includes the followings. The UPE searches for an item in the VPLS MAC table, in which the item is corresponding to destination address information carried in the message from the network side. The UPE forwards the message from the network side in a broadcasting mode if the item is not existed. In the preferred embodiment, if the item is not existed in the VPLS MAC table, the UPE forwards the message from the network side in the broadcasting mode so that the message can be forwarded timely.

Preferably, after the UPE searches for the item in the VPLS MAC table, in which the item is corresponding to the destination address information carried in the message from the network side, the method further includes the followings. If the item is existed, the UPE transmits the message from the network side to a user device corresponding to the destination address information in a unicast mode. In the preferred embodiment, after determining that the item is existed, the UPE directly transmits the message to the user device corresponding to the destination address information in the unicast mode, so that the unnecessary waste of system resources is reduced.

Preferably, when the UPE receives the message from the user side, the method further includes the followings. The UPE directly transmits the message from the user side to the network device of the network side connected with the UPE. In the preferred embodiment, the message is directly transmitted to the network device of the network side connected with the UPE, so as to improve the forwarding performance.

Preferably, the UPE does not learn the MAC information of the message from the network side in the VPLS MAC table on the UPE includes the follows. The UPE does not generate an item corresponding to the MAC information in the VPLS MAC table. In the preferred embodiment, the item corresponding to the MAC information of the message from the network side is not generated, so as to reduce the occupied space in the VPLS MAC table on the UPE.

### Embodiment 2

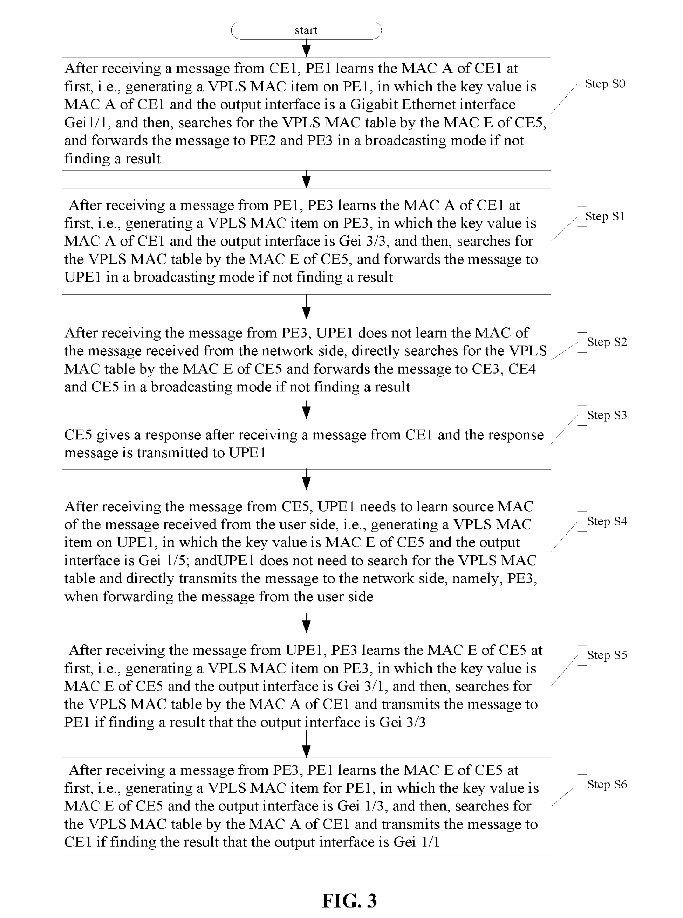

As shown in Fig. 1, a VPLS fully connected link is set up among PE1, PE2 and PE3; CE1 accesses PE1, CE2 accesses PE2, UPE1 accesses PE3, and CE3, CE4 and CE5 are hooked to UPE1. It is assumed that CE1 will communicate with CE5. The specific implementation flow is as shown in Fig. 3, and the method for configuring the VPLS MAC item space according to the embodiment of the present invention includes the following steps.

Step 0: After receiving a message from CE1, PE1 learns the MAC A of CE1 at first, i.e., generating a VPLS MAC item on PE1, in which the key value is MAC A of CE1 and the output interface is a Gigabit Ethernet interface Gei1/1, and then, searches for the VPLS MAC table by the MAC E of CE5, and forwards the message to PE2 and PE3 in a broadcasting mode if not finding a result.

Step 1: After receiving a message from PE1, PE3 learns the MAC A of CE1 at first, i.e., generating a VPLS MAC item on PE3, in which the key value is MAC A of CE1 and the output interface is Gei 3/3, and then, searches for the VPLS MAC table by the MAC E of CE5, and forwards the message to UPE1 in a broadcasting mode if not finding a result.

Step 2: After receiving the message from PE3, UPE1 does not learn the MAC of the message received from the network side, directly searches for the VPLS MAC table by the MAC E of CE5 and forwards the message to CE3, CE4 and CE5 in a broadcasting mode if not finding a result.

Step 3: CE5 gives a response after receiving a message from CE1 and the response message is transmitted to UPE1.

Step 4: After receiving the message from CE5, UPE1 needs to learn source MAC of the message received from the user side, i.e., generating a VPLS MAC item on UPE1, in which the key value is MAC E of CE5 and the output interface is Gei 1/5; andUPE1 does not need to search for the VPLS MAC table and directly transmits the message to the network side, namely, PE3, when forwarding the message from the user side.

Step 5: After receiving the message from UPE1, PE3 learns the MAC E of CE5 at first, i.e., generating a VPLS MAC item on PE3, in which the key value is MAC E of CE5 and the output interface is Gei 3/1, and then, searches for the VPLS MAC table by the MAC A of CE1 and transmits the message to PE1 if finding a result that the output interface is Gei 3/3.

Step 6: After receiving a message from PE3, PE1 learns the MAC E of CE5 at first, i.e., generating a VPLS MAC item for PE1, in which the key value is MAC E of CE5 and the output interface is Gei 1/3, and then, searches for the VPLS MAC table by the MAC A of CE1 and transmits the message to CE1 if finding the result that the output interface is Gei 1/1.

Through the steps above, the communication between CE1 and CE5 is completed once, the VPLS MAC item is also added in each device in the forwarding process of the message, and the contents of the item are as shown in Table 1. It can be seen from the table that UPE1 only has the MAC E of the user side but no MAC A of the network side, and PE1 and PE3 have both the MAC A and the MAC E. Through the solution , the VPLS MAC item space of the UPE is greatly reduced, and the condition that an unknown unicast message is broadcast as the VPLS MAC item space on the UPE is saturated and the MAC of a user cannot be learned is avoided, so as to effectively improve the forwarding performance of the UPE.

**Table 1**

| Device | key value of VPLS MAC table | output interface of VPLS MAC table |
|---|---|---|
| PE1 | A | Gei 1/1 |
| | E | Gei 1/3 |
| PE3 | A | Gei 3/3 |
| | E | Gei 3/1 |
| UPE1 | E | Gei 1/5 |

It should be understood that the embodiments above are described in detail but are not interpreted to limit the scope of protection of the present invention, and the scope of protection of the present invention shall be subjected to the claims.

### Embodiment 3

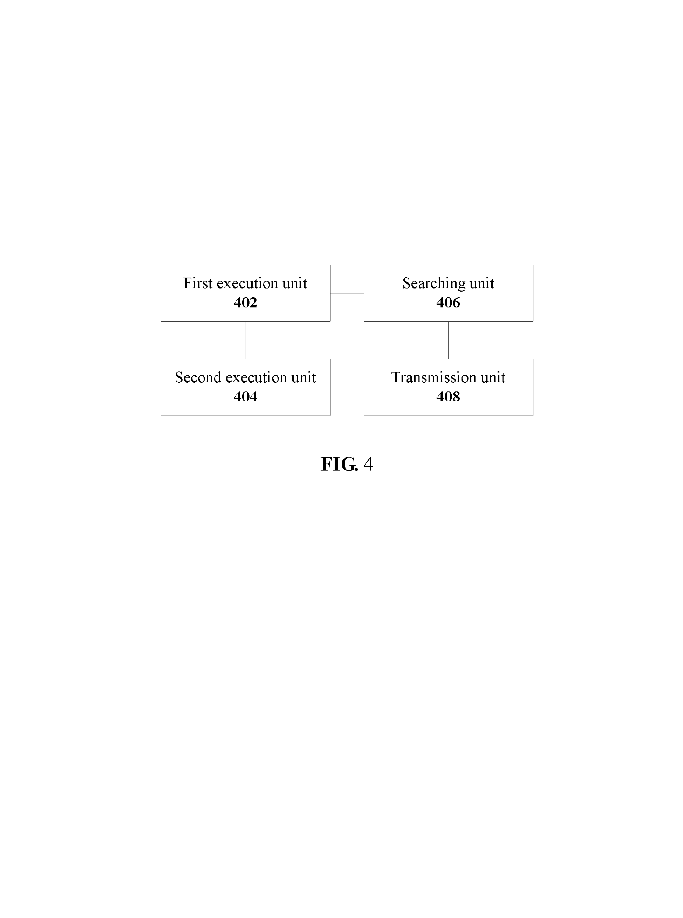

Fig. 4 is a preferred schematic diagram of the structure of an apparatus for configuring a VPLS MAC item space according to an embodiment of the present invention. The apparatus includes a first execution unit 402, configured to, when a UPE receives a message from a network side, execute an operation of not learning MAC information of the message from the network side in a VPLS MAC table on the UPE; and a second execution unit 404 ,communicated with a first execution unit 402, and configured to, when the UPE receives a message from a user side, execute an operation of learning the MAC information of the message from the user side in the VPLS MAC table on the UPE; wherein a side of the UPE connected with the network device is the network side and the other side of the UPE connected with a user device is the user side.

In the preferred embodiment, after receiving the message from the network side, the UPE does not learn the message from the network side, so as to the VPLS MAC item space on the UPE, improve the forwarding performance of the UPE and solve the technical problem of reduction of processing performance caused by the exhaustion of the VPLS MAC item space on the UPE in the conventional art.

Preferably, the apparatus for configuring the VPLS MAC item space is configured on the UPE, wherein the UPE is only connected with one network device in the network side. In the preferred embodiment, the UPE is only connected with one network device, so as to improve the forwarding performance. Of course, in the embodiment, the UPE can be connected with a plurality of user devices on the user side.

Preferably, the apparatus for configuring the VPLS MAC item space further includes: a searching unit 406, configured to search for an item in the VPLS MAC table, wherein the item is corresponding to destination address information carried in the message from the network side; and a transmission unit 408, configured to forward the message from the network side in a broadcasting mode if the item is not existed. Preferably, the searching unit 406 communicates with the first execution unit 402, and the transmission unit 408 communicates with the second execution unit 404. In the preferred embodiment, after determining that the item is not existed in the VPLS MAC table, the UPE forwards the message from the network side in the broadcasting mode, so as to ensure the timely forwarding of the message. Preferably, after the item is searched in the VPLS MAC table, wherein the item is corresponding to the destination address information carried in the message from the network side, if the item is existed, the transmission unit 408 transmits the message from the network side to the user device corresponding to the destination address information in a unicast mode. In the preferred embodiment, after determining that the item is existed, the message is transmitted to the user device corresponding to the destination address information in the unicast mode, so as to reduce unnecessary waste of system resources.

Preferably, the transmission unit 408 is further configured to, when the UPE receives the message from the user side, directly transmit the message from the user side to the network device of the network side connected with the UPE. In the preferred embodiment, the message is directly transmitted to the network device of the network side connected with the UPE, so as to improve the forwarding performance.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the present invention are all included in the scope of the protection of the present invention.

## Claims

1. A method for configuring a Virtual Private LAN Service (VPLS) Media Access Control (MAC) item space, **characterized by** comprising:
- when a User facing-Provider Edge (UPE) receives a message from a network side, executing an operation of not learning MAC information of the message from the network side in a VPLS MAC table on the UPE; and
- when the UPE receives a message from a user side, executing an operation of learning MAC information of the message from the user side in the VPLS MAC table on the UPE;
- wherein a side of the UPE connected with a network device is the network side and the other side of the UPE connected with a user device is the user side.

2. The method according to claim 1, **characterized in that** the UPE is only connected with one network device in the network side.

3. The method according to claim 1, **characterized in that** when the UPE receives the message from the network side, the method further comprises:
- the UPE searching for an item in the VPLS MAC table, wherein the item corresponds to destination address information carried in the message from the network side; and
- the UPE forwarding the message from the network side in a broadcasting mode if the item is not existed.

4. The method according to claim 3, **characterized in that** after the UPE searching for the item in the VPLS MAC table, wherein the item corresponds to the destination address information carried in the message from the network side, the method further comprises:
- the UPE transmitting the message from the network side to a user device corresponding to the destination address information in a unicast mode if the item is existed.

5. The method according to claim 1 or 2, **characterized in that** when the UPE receives the message from the user side, the method further comprises:
- the UPE directly transmitting the message from the user side to the network device of the network side connected with the UPE.

6. The method according to claim 1, **characterized in that** executing the operation of not learning the MAC information of the message from the network side in the VPLS MAC table on the UPE comprises:
- the UPE not generating an item corresponding to the MAC information in the VPLS MAC table.

7. An apparatus for configuring a Virtual Private LAN Service (VPLS) Media Access Control (MAC) item space, **characterized by** comprising:
- a first execution unit, configured to, when a User facing-Provider Edge (UPE) receives a message from a network side, execute an operation of not learning MAC information of the message from the network side in a VPLS MAC table on the UPE; and
- a second execution unit, configured to, when the UPE receives a message from a user side, execute an operation of learning MAC information of the message from the user side in the VPLS MAC table on the UPE;
- wherein a side of the UPE connected with a network device is the network side and the other side of the UPE connected with a user device is the user side.

8. The apparatus according to claim 7, **characterized in that** the apparatus for configuring the VPLS MAC item space is configured on the UPE, wherein the UPE is only connected with one network device in the network side.

9. The apparatus according to claim 7 or 8, **characterized by** further comprising:
- a searching unit, configured to search for an item in the VPLS MAC table, wherein the item corresponds to destination address information carried in the message from the network side; and
- a transmission unit, configured to forward the message from the network side in a broadcasting mode if the item is not existed.

10. The apparatus according to claim 7 or 8, **characterized in that** the transmission unit is further configured to directly transmit the message from the user side to the network device of the network side connected with the UPE when the UPE receives the message from the user side.
